# FASCICULE DE BREVET EUROPEEN

(11) **EP 3 432 432 B1**
(45) Date de publication et mention de la délivrance du brevet: **17.08.2022**
(21) Numéro de dépôt: 18177944.8
(22) Date de dépôt: 15.06.2018
(51) Int. Cl.: H02G 3/10, H02G 3/14

(54) **ELEMENT D'HABILLAGE POUR APPAREILLAGE ELECTRIQUE**
VERKLEIDUNGSELEMENT FÜR ELEKTROGERÄT
COVERING PLATE FOR AN ELECTRICAL DEVICE

(30) Priorité: 21.07.2017 FR 1756982
(43) Date de publication de la demande: 23.01.2019
(73) Titulaire: Legrand France, 87000 Limoges (FR); Legrand SNC, 87000 Limoges (FR)
(72) Inventeur: JANICOT, Laurent, 87110 Solignac (FR); MOURGAUD, Jean-François, 87220 Feytiat (FR)
(74) Mandataire: Jacobacci Coralis Harle

(56) Documents cités:
- EP-A1- 1 860 748
- EP-A2- 2 802 050
- WO-A1-2013/182819
- FR-A1- 2 695 532
- FR-A1- 2 844 106
- FR-A1- 2 986 669
- Sue Page: "Legrand - Plexo composable bo?tiers et supports plaques", , 28 février 2012 (2012-02-28), XP055281175, Extrait de l'Internet: URL:http://www.laboutiquedepke.fr/media/ma gentypes/2015-07-29-072512_legrand-69685-f m.pdf [extrait le 2016-06-16]

## Description

La présente invention concerne de manière générale les appareillages électriques (prises de courant, interrupteurs...) à rapporter dans des parois.

Elle concerne plus particulièrement un élément d'habillage comportant une plaque de finition qui délimite au moins deux ouvertures d'accès aux parties fonctionnelles de deux appareillages électriques distincts, fixés dans deux boîtes électriques monopostes, et des moyens de fixation de la plaque de finition auxdits deux appareillages électriques.

L'invention trouve une application particulièrement avantageuse dans la réalisation d'éléments d'habillage à rapporter sur des appareillages électriques montés de façon encastrée dans des parois.

Elle concerne également un ensemble comportant plusieurs appareillages électriques et une plaque de finition telle que précitée.

### ARRIERE-PLAN TECHNOLOGIQUE

Un appareillage électrique comporte généralement un mécanisme d'appareillage (prise de courant, interrupteur...) bloqué dans un support en forme de cadre, lequel comporte des moyens de fixation à une boîte électrique encastrée dans une paroi ou rapportée en saillie d'une telle paroi.

Il existe également des appareillages électriques dans lesquels le support et le socle du mécanisme d'appareillage constituent une seule pièce issue de moulage.

Pour installer deux appareillages électriques en position juxtaposée ou superposée sur une paroi murale, on peut utiliser soit une boîte électrique allongée dite « multiposte », soit deux boîtes électriques rondes ou carrées dites « monopostes ».

Par souci esthétique, on utilise quoiqu'il en soit un seul et unique élément d'habillage qui se présente généralement sous la forme d'une plaque recouvrant les deux appareillages électriques. Cette plaque comporte alors deux ouvertures laissant accès aux parties fonctionnelles des deux mécanismes (puits de réception de fiche électrique, bouton de commande d'interrupteur...).

Lorsque l'installateur souhaite utiliser deux boîtes électriques monopostes, il doit les installer avec soin, avec un entraxe très précis (typiquement égal exactement à 71 millimètres). Cette installation s'avérant toujours difficile à mettre en œuvre, on constate généralement un désaxage entre les deux boîtes.

Or, l'élément d'habillage est prévu pour se fixer conjointement sur les deux supports d'appareillages électriques. Du fait du décalage entre les appareillages fixés dans les deux boîtes électriques, la pose de cet élément d'habillage n'est alors soit plus possible, soit possible mais en force, ce qui engendre de grosses contraintes mécaniques pouvant aboutir à la rupture des moyens de fixation de l'élément d'habillage sur les deux supports d'appareillages électriques.

On notera par ailleurs le document FR2986669 qui divulgue un boîtier électrique multiposte comportant une platine et un capot qui délimitent un logement d'accueil d'appareillages électriques d'épaisseurs différentes. Autres exemples pertinents sont présents dans les documents: EP1860748A1, FR2844106A1 et WO2013/182819A1.

### OBJET DE L'INVENTION

Afin de remédier à l'inconvénient précité de l'état de la technique, la présente invention propose d'offrir aux moyens de fixation un peu de jeu, de façon à ce qu'ils puissent simultanément se fixer aux deux supports d'appareillages électriques même lorsque ceux-ci sont légèrement désaxés.

Plus particulièrement, on propose selon l'invention un élément d'habillage tel que défini dans la revendication 1.

Ainsi, grâce à l'invention, si les boîtes monopostes et les appareillages électriques qui y sont installés sont légèrement désaxés, ladite partie des moyens de fixation pourra rattraper ce défaut de montage, de sorte que l'élément d'habillage pourra être fixé sans contrainte.

L'installation est ainsi plus facile à mettre en œuvre et elle réduit les risques de casse de l'élément d'habillage.

Par conséquent, l'élément d'habillage pourra aussi bien être positionné sur des supports d'appareillages électriques installés dans une même boîte multiposte que sur des supports d'appareillages électriques installés dans des boîtes monopostes distinctes.

D'autres caractéristiques avantageuses et non limitatives de l'élément d'habillage conforme à l'invention sont définies dans les revendications 2 à 12..

L'invention concerne aussi un ensemble électrique tel que défini dans la revendication 13.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un élément d'habillage conforme à l'invention et d'un appareillage électrique prêt à recevoir cet élément d'habillage ;
- la figure 2 est une vue schématique en perspective partiellement éclatée de l'élément d'habillage de la figure 1 ;
- la figure 3 est une vue schématique en perspective arrière de l'une des collerettes flottantes de l'élément d'habillage de la figure 1 ;
- la figure 4 est une vue en coupe selon le plan A-A de la figure 1 ;
- la figure 5 est une vue de détail de la zone V de la figure 4 ;
- la figure 6 est une vue schématique en perspective de l'appareillage électrique de la figure 1 ;
- la figure 7 est une vue schématique en perspective assemblée de la collerette flottante de la figure 3 et de l'appareillage électrique de la figure 1 ; et
- la figure 8 est une vue schématique en coupe de l'élément d'habillage et de l'appareillage électrique de la figure 1, en position assemblée.

Pour installer un appareillage électrique (tel qu'une prise de courant ou un interrupteur) dans ou sur une paroi, on utilise généralement une boîte électrique. Pour cacher le bord avant de cette boîte, on utilise en outre un élément d'habillage qui vient border une partie fonctionnelle de l'appareillage électrique (cette partie fonctionnelle devant rester accessible à l'usager).

Pour installer deux appareillages électriques en position superposée ou juxtaposée sur la paroi murale, on peut utiliser une boîte multiposte, ou deux boîtes monopostes. On utilise en revanche toujours un seul et unique élément d'habillage qui vient encadrer les parties fonctionnelles des deux appareillages électriques.

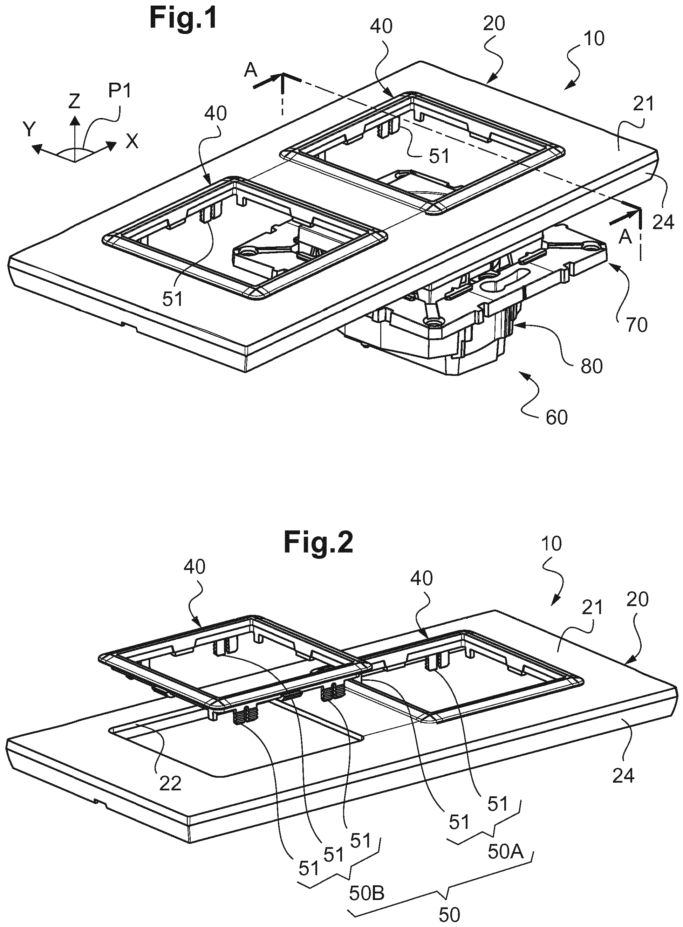

Sur la figure 1, on a représenté un tel élément d'habillage 10. On a également représenté l'un des deux appareillages électriques 60 que cet élément d'habillage 10 est destiné à venir recouvrir.

Dans la description, les termes « avant » et « arrière » seront utilisés par rapport à la direction du regard de l'usager vers la paroi sur laquelle est rapporté cet élément d'habillage 10. Par exemple, lorsque la paroi sera une cloison murale d'une pièce, l'avant d'un élément désignera le côté de cet élément qui est tourné vers l'intérieur de la pièce et l'arrière de cet élément désignera le côté qui est tourné vers l'extérieur de la pièce.

La présente invention porte alors plus précisément sur l'élément d'habillage 10. L'architecture de l'appareillage électrique 60 ne sera alors que brièvement décrite, à la fin de cet exposé. On notera uniquement à ce stade qu'un tel appareillage électrique 60 comporte un mécanisme d'appareillage 80 et un support d'appareillage 70.

Comme le montrent les figures 1 et 2, l'élément d'habillage 10 comprend principalement une plaque de finition 20 de forme allongée, qui délimite ici deux ouvertures d'accès 22 prévues pour laisser un accès aux parties fonctionnelles des deux appareillages électrique 60.

La plaque de finition 20 présente plus précisément ici une paroi frontale 21 plane et de forme rectangulaire, dans laquelle sont prévues les ouvertures d'accès 22 et qui est bordée extérieurement par un rebord périphérique 24.

Comme le montre la figure 1, cette paroi frontale 21 s'étend dans un plan P1 défini par deux axes X, Y, si bien qu'elle s'étend orthogonalement à un troisième axe Z (les axes X, Y, Z définissant un repère orthonormé).

Le rebord périphérique 24 s'étend vers l'arrière par rapport à la paroi frontale 21, de telle manière que sa tranche puisse s'appliquer contre la paroi murale.

Les deux ouvertures d'accès 22 sont ici de formes carrées. En variante, elles pourraient présenter des formes différentes.

Comme le montre la figure 2, l'élément d'habillage 10 comporte en outre des moyens de fixation 50 de la plaque de finition 20 aux supports d'appareillage 70 des deux appareillages électriques 60.

Une première partie 50A des moyens de fixation 50 est plus précisément destinée à se fixer à un premier support d'appareillage 70, tandis qu'une seconde partie 50B des moyens de fixation 50 est destinée à se fixer au second support d'appareillage 70.

Ces moyens de fixation 50 sont conçus pour pouvoir se fixer simultanément sur les deux supports d'appareillage 70 des appareillages électriques 60, que ces derniers soient placés dans une boîte électrique multiposte avec un entraxe très précis ou qu'ils soient placés dans des boîtes électriques monopostes distinctes avec un entraxe plus aléatoire et avec un possible décalage axial.

Pour cela, selon une caractéristique particulièrement avantageuse de l'invention, la première partie 50A des moyens de fixation 50 est solidarisée avec du jeu à la plaque de finition 20.

On pourrait prévoir que la seconde partie des moyens de fixation soit solidarisée fixement à la plaque de finition (sans jeu). Toutefois, ici, il est prévu que chaque partie 50A, 50B des moyens de fixation 50 soit solidarisée à la plaque de finition 20 avec du jeu, de façon indépendante. De cette manière, le jeu globalement offert aux moyens de fixation 50 est plus important.

Pour bien comprendre l'invention, on peut s'intéresser plus précisément au mode de réalisation représenté sur les figures.

Comme le montre la figure 2, dans ce mode de réalisation, la plaque de finition 20 est équipée de deux pièces, ci-après appelées « collerettes flottantes 40 », qui sont respectivement attachées aux bords de ses deux ouvertures d'accès 22, avec du jeu.

Chaque collerette flottante 40 présente une forme carrée afin de border l'ensemble de l'ouverture d'accès correspondante. En variante, elle pourrait présenter une forme différente, par exemple une forme en U auquel cas elle ne borderait l'ouverture d'accès 22 que sur une partie de son contour.

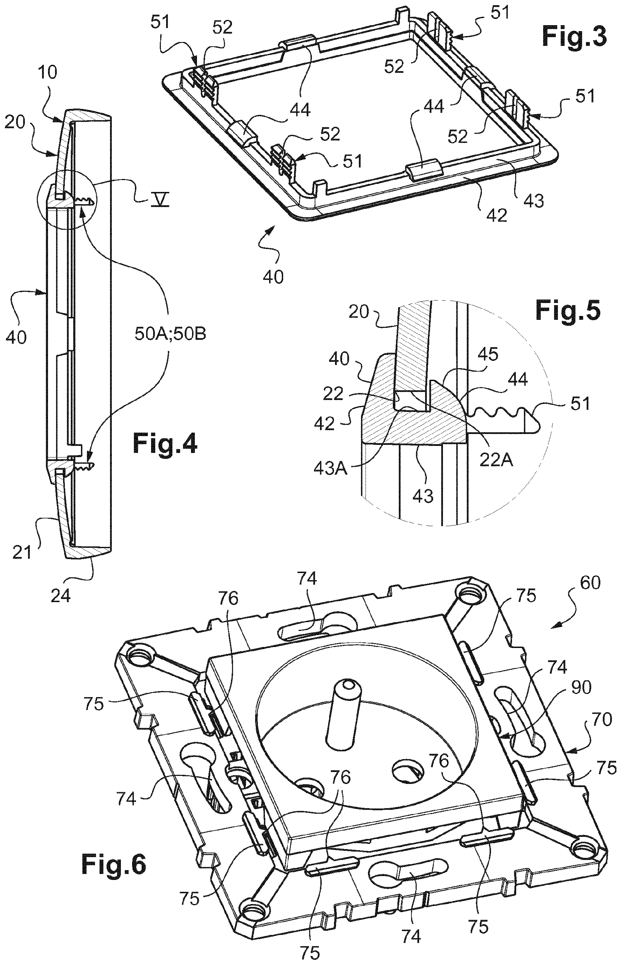

Comme le montrent bien les figures 3 à 5, chaque collerette flottante 40 comporte un cadre 43 dont le bord avant est replié vers l'extérieur pour former un rebord périphérique avant 42 adapté à s'appuyer contre la face avant de la paroi frontale 21 de la plaque de finition 20.

Ce rebord périphérique avant 42 s'amincit ici vers l'extérieur, de façon à présenter une forme esthétique. Il peut, pour la même raison, présenter une couleur particulière et être réalisé dans un matériau particulier, afin d'être mis en valeur.

Le cadre 43 de la collerette flottante 40 est conçu pour s'interposer entre la partie fonctionnelle de l'appareillage électrique 60 et le bord de l'ouverture d'accès 22 correspondante de la plaque de finition 20.

Il présente une taille légèrement inférieure à celle de l'ouverture d'accès 22, pour offrir le jeu de fonctionnement souhaité. Ainsi la collerette flottante 40 peut-elle venir border la partie fonctionnelle de l'appareillage électrique 60 même si cette dernière n'est pas exactement bien centrée et orientée dans l'ouverture d'accès 22 de la plaque de finition.

On observe bien sur la figure 5 que la face externe 43A du cadre 43 n'est pas en appui contre le bord 22A de l'ouverture d'accès 22 correspondante, du fait de ce jeu de fonctionnement.

Ici, l'ouverture d'accès 22 est parfaitement carrée, et il en va de même pour le cadre 43. On comprend donc que chaque collerette flottante 40 est montée avec du jeu sur la plaque de finition 20 selon les deux axes X, Y. Ce jeu est supérieur à un dixième de millimètre. Il est préférentiellement supérieur à 5 dixièmes de millimètre. Il ici égal à un millimètre, mais il pourrait être supérieur.

Ainsi, lorsque l'un des côtés du cadre 43 est en appui contre le bord correspondant de l'ouverture d'accès 22, l'autre des côtés du cadre 43 est situé à une distance du bord correspondant de l'ouverture d'accès 22 qui est égale à ce jeu.

Par conséquent, chaque collerette flottante 40 est mobile en translation sur la plaque de finition 20 selon l'axe X et selon l'axe Y, avec un débattement réduit, et elle est également mobile en rotation autour de l'axe Z, avec un débattement également réduit.

Le jeu de chaque collerette flottante 40 par rapport à la plaque de finition 20 reste ainsi restreint, de façon à ne pas donner à l'installateur une sensation de mauvais assemblage.

En revanche, les jeux offerts par les deux collerettes flottantes 40 s'additionnent, ce qui permet de rattraper de plus grand défaut d'entraxe et de désaxage des deux appareillages électriques 60 l'un par rapport à l'autre.

Comme le montre la figure 3, le cadre 43 présente par ailleurs, en saillie de son bord arrière, des crans 44 prévus pour s'accrocher à l'arrière de la paroi frontale 21 de la plaque de finition 20, ainsi que plusieurs pattes d'encliquetage 51 (lesquelles forment ladite partie 50A ou 50B des moyens de fixation 50).

Les crans 44 et le rebord périphérique avant 42 de chaque collerette flottante 40 son conçus pour pincer le bord de l'ouverture d'accès 22 correspondante de la plaque de finition 20, c'est-à-dire pour prendre en sandwich la paroi frontale 21 de la plaque de finition 20. Il est ici prévu un cran 44 sur chaque côté du cadre 43, de façon à assurer une solidarisation solide de la collerette flottante 40 à la plaque de finition 20.

Les crans 44 sont prévus pour ne pas entraver la mobilité de la collerette flottante 40 par rapport à la plaque de finition 20.

Pour cela, comme le montre bien la figure 5, chaque cran 44 s'étend à partir du bord arrière du cadre 43 et est replié vers l'extérieur de telle sorte que la distance séparant la face avant de chaque cran 44 de la face arrière du rebord périphérique avant 42 soit très légèrement supérieure à l'épaisseur de la plaque de finition 20.

Comme le montre également cette figure 5, la face arrière de chaque cran 44 est biseautée vers l'extérieur, de façon à former une rampe 45 qui permet le montage de la collerette flottante 40 sur la plaque de finition 20 par encliquetage.

La face avant de chaque cran 44 est en revanche plane et s'étend dans un plan parallèle à celui de la face arrière du rebord périphérique avant 42, de manière à ne pas pouvoir être désencliqueté de la plaque de finition 20 (sauf à exercer un effort d'arrachement très important, au moyen d'un outil).

Comme le montre la figure 2, chaque partie 50A, 50B des moyens de fixation 50 comporte ici plusieurs pattes d'encliquetage 51 distinctes.

Comme le montre la figure 3, il est ici prévu quatre pattes d'encliquetage 51 réparties par paires sur deux branches opposées du cadre 43.

Ces pattes d'encliquetage 51 s'étendent à partir du bord arrière du cadre 43, dans le prolongement de celui-ci (vers l'arrière), et elles portent sur leurs faces externes chacune au moins une dent d'accrochage.

Ici, chaque patte d'encliquetage 51 porte une série de plusieurs dents d'accrochage, réparties à différentes hauteurs par rapport au cadre 43 (de l'avant vers l'arrière), de façon que l'élément d'habillage 10 puisse s'accrocher à différentes hauteurs sur les supports d'appareillage 70 des appareillages électriques 60.

Il arrive en effet qu'il faille compenser une différence de hauteur entre l'élément d'habillage 10 et les supports d'appareillage 70 ; c'est par exemple le cas lorsque les supports d'appareillage 70 s'appliquent directement sur la paroi murale brute et que l'élément d'habillage 10 s'applique sur la paroi murale finie (c'est-à-dire enduite ou recouverte d'un papier peint...). Les séries de dents d'accrochage permettent alors d'ajuster au mieux la position de l'élément d'habillage 10 par rapport à la paroi murale et par rapport aux supports d'appareillage 70 des appareillages électriques 60.

Ici, chaque patte d'encliquetage 51 est par ailleurs fendue longitudinalement en deux parties identiques, par une fente 52 dont la fonction apparaitra clairement dans la suite de cet exposé.

De façon préférentielle, les pattes d'encliquetage 51 et les crans 44 sont conformés de telle sorte que, lorsqu'un effort est exercé sur la plaque de finition 20 pour encliqueter les pattes d'encliquetage 51 des collerettes flottantes 40 sur les supports d'appareillage 70 des appareillages électriques 60, les crans 44 des collerettes flottantes 40 ne se décrochent pas de la plaque de finition 20. Autrement formulé, les crans 44 des collerettes flottantes 40 sont adaptés à résister ensemble à un effort d'arrachement par rapport à la plaque de finition 20 qui est supérieur à l'effort nécessaire pour encliqueter les pattes d'encliquetage 51 sur le support d'appareillage 70 de l'appareillage électrique 60.

Bien entendu, à l'inverse, lorsqu'il s'agira de retirer la plaque de finition 20 afin de la démonter des supports d'appareillage 70, le rebord périphérique avant 42 des collerettes flottantes 40 sera conformé pour résister à un effort d'arrachement par rapport à la plaque de finition 20.

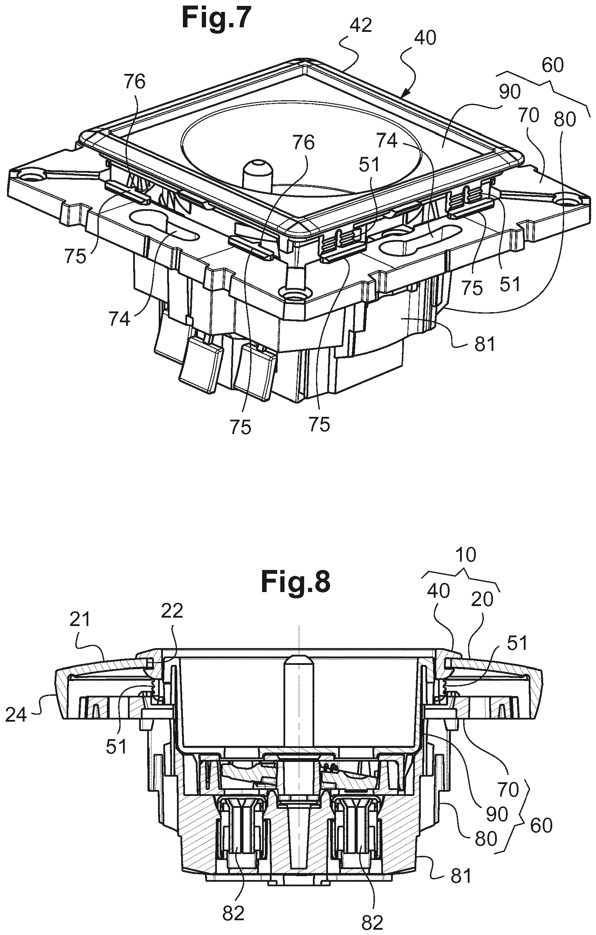

Bien qu'il ne fasse pas précisément l'objet de la présente invention, on peut maintenant décrire brièvement l'architecture de l'un des deux appareillages électriques 60, en référence aux figures 6 à 8. On considérera que l'autre appareillage électrique est identique, ou au moins homologue.

Cet appareillage électrique 60 comprend classiquement un mécanisme d'appareillage 80, un support d'appareillage 70 et un enjoliveur 90.

Le mécanisme d'appareillage 80 pourrait être de tout type. Il pourrait ainsi s'agir d'un mécanisme d'interrupteur, de va-et-vient, de variateur électrique, de prise réseau (RJ45), de prise de téléphone (RJ11), de voyant, ou encore de détecteur (de fumée, d'inondation, de température, de mouvement ou de lumière). Tel qu'il est représenté sur la figure 1, il s'agit ici d'un mécanisme de prise de courant.

Il comporte un socle arrière 81 qui est globalement parallélépipédique et qui loge le moteur de l'appareillage (ici les alvéoles 82 de réception des broches d'une fiche électrique et les bornes électriques à connecter au réseau électrique local).

Ce socle arrière 81 est fermé à l'avant par une partie fonctionnelle, appelée « enjoliveur 90 » (qui délimite ici un puits de réception d'une fiche électrique).

Ce socle arrière 81 pourrait être assemblé au support d'appareillage70, mais dans le mode de réalisation ici représenté, il forme une seule pièce avec celui-ci.

Le support d'appareillage 70 se présente sous la forme d'un cadre carré bordant à l'avant le socle arrière 81.

Il est prévu pour permettre de fixer l'appareillage électrique 60 à une boîte encastrée dans la paroi murale. Il comporte à cet effet, au centre de chacune de ses quatre branches, un orifice 74 en forme de trou de serrure propre à permettre sa fixation par vissage à la boîte électrique. En complément ou en variante, il pourrait être équipé, à l'arrière de deux de ses branches opposées, de vis de griffe propres à permettre la fixation du support d'appareillage à la boîte électrique par accrochage.

Enfin, le support d'appareillage 70 comporte des moyens d'assujettissement d'élément d'habillage 10, auxquels les pattes d'encliquetage 51 peuvent venir s'accrocher.

Dans le mode de réalisation ici représenté, ces moyens d'assujettissement se présentent sous la forme de nervures 75 qui font saillie à l'intérieur de l'ouverture délimitée par le support d'appareillage 70 et ici en outre sur la face avant du support d'appareillage 70.

Il est ici prévu deux nervures 75 espacées, sur chaque branche du support d'appareillage 70. De cette manière, quelle que soit l'orientation (verticale ou horizontale) de l'élément d'habillage 10 sur la paroi murale, les pattes d'encliquetage 51 peuvent s'accrocher aux unes ou aux autres de ces nervures 75.

Chaque nervure 75 présente en outre un ergot central 76 pointu faisant saillie vers le centre du cadre. Cet ergot central 76 est prévu pour s'engager dans la fente de la patte d'encliquetage 51 correspondante, ce qui assure un bon centrage de la collerette flottante 40 par rapport à l'appareillage électrique 60.

L'installation de deux appareillages électriques 60 dans la paroi murale se fait alors de la façon suivante.

L'installateur commence par pratiquer une ouverture oblongue ou deux ouvertures circulaires dans la paroi, selon qu'il souhaite utiliser une boîte multiposte ou deux boîtes monopostes.

Il tire ensuite, au travers de l'ouverture oblongue ou de l'une des ouvertures circulaires, une gaine électrique dans laquelle sont enfilés des fils électriques.

L'installateur rapporte ensuite la ou les boîte(s) électrique(s) dans la paroi, en prenant soin d'engager la gaine électrique au travers du fond de la boîte multiposte ou de l'une des boîtes monopostes.

Il connecte les fils électriques issus de cette gaine à l'un des mécanismes d'appareillage 80, puis il connecte le second mécanisme d'appareillage en parallèle du premier.

L'installateur rapporte alors les deux appareillages électriques dans la boîte multiposte ou dans les boîtes monopostes, et il les y visse.

Enfin, l'installateur rapporte l'élément d'habillage 10 à l'avant des supports d'appareillage 70 des appareillages électriques 60, de telle manière que les pattes d'encliquetage 51 de chacune de ses collerettes flottantes 40 viennent s'encliqueter sur les nervures 75 de ces supports d'appareillage 70.

Lors de cette dernière opération, l'installateur peut profiter du jeu de montage des collerettes flottantes 40 sur la plaque de finition 20 de façon à ce que ces collerettes puissent se centrer indépendamment l'une de l'autre dans l'axe des enjoliveurs 90 des appareillages électriques 60 et puissent ensuite coulisser librement le long des faces externes de ces enjoliveurs 90.

La présente invention n'est nullement limitée au mode de réalisation décrit et représenté, mais l'homme du métier saura y apporter toute variante conforme à l'invention.

Ainsi, on aurait pu prévoir qu'une seule des deux collerettes soit montée avec du jeu sur la plaque de finition, et que l'autre collerette soit fixée sans jeu sur celle-ci. Cette autre collerette et la plaque de finition pourrait ainsi être formées d'une seule pièce.

On pourrait aussi prévoir que l'élément d'habillage soit dépourvu de collerette flottante, et que les pattes d'encliquetage soient montées directement sur la plaque de finition, avec du jeu. Dans cette variante, on pourrait ainsi prévoir que chaque patte d'encliquetage soit fixée à la plaque de finition via un raccord en matière légèrement flexible ou via une coulisse, offrant le jeu souhaité.

Encore en variante, on pourrait prévoir que la plaque de finition comporte davantage d'ouverture d'accès, et qu'elle soit prévue pour être rapportée sur un plus grand nombre d'appareillages électriques (typiquement 3 ou 4).

Selon une autre variante, on pourrait prévoir que les collerettes flottantes 40 soient solidarisées à la plaque de finition 20 avec un jeu très supérieur à un millimètre. Dans ce cas, le rebord périphérique avant 42 et les crans 44 devront être prolongés, de façon à ce qu'ils puissent toujours pincer la paroi frontale 21 de la plaque de finition 20. Si le jeu est vraiment important (plusieurs millimètres) et que les crans sont alors très longs, l'encliquetage de ces crans 44 sur la plaque de finition 20 lors de l'assemblage de l'élément d'habillage 10 peut s'avérer difficile. Dans cette éventualité, on pourra prévoir que les crans soient montés de façon mobile sur le cadre 43 de la collerette (par exemple qu'ils soient solidarisés au cadre 43 par des charnières d'axes parallèles à l'axe Z).

## Revendications

1. Elément d'habillage (10) comportant :
- une plaque de finition (20) qui délimite au moins deux ouvertures d'accès (22) aux parties fonctionnelles (90) de deux appareillages électriques (60) distincts fixés dans deux boîtes électriques monopostes, et
- des moyens de fixation (44, 50) de la plaque de finition (20) auxdits deux appareillages électriques (60),
au moins une partie (50A) desdits moyens de fixation (44, 50) est solidarisée avec du jeu à la plaque de finition (20) de façon à permettre auxdits moyens de fixation (44, 50) de se fixer auxdits deux appareillages électriques (60) sans contrainte même lorsque ces deux appareillages électriques (60) sont légèrement désaxés par rapport aux deux ouvertures d'accès (22), ledit jeu étant supérieur à un dixième de millimètre.

2. Elément d'habillage (10) selon la revendication précédente, dans lequel ladite partie (50A) desdits moyens de fixation (44, 50) est adaptée à se fixer à l'un desdits appareillages électriques (60), et dans laquelle une autre partie (50B) desdits moyens de fixation (44, 50) est adaptée à se fixer à un autre desdits appareillages électriques (60).

3. Elément d'habillage (10) selon la revendication précédente, dans lequel chaque partie (50A, 50B) desdits moyens de fixation (44, 50) est solidarisée avec du jeu à la plaque de finition (20).

4. Elément d'habillage (10) selon l'une des revendications précédentes, dans lequel ladite partie (50A) desdits moyens de fixation (44, 50) appartient à une même et seule pièce flottante (40), qui est distincte de la plaque de finition (20) et qui est montée avec du jeu sur ladite plaque de finition (20).

5. Elément d'habillage (10) selon les deux revendications précédentes, dans lequel il est prévu autant de pièces flottantes (40) que d'ouvertures d'accès (22) dans la plaque de finition (20).

6. Elément d'habillage (10) selon l'une des deux revendications précédentes, dans lequel ladite pièce flottante (40) comporte une collerette (43) qui borde intérieurement l'une des ouvertures d'accès (22) et qui porte ladite partie (50A) des moyens de fixation (44, 50).

7. Elément d'habillage (10) selon l'une des trois revendications précédentes, dans lequel la plaque de finition (20) comporte une paroi frontale (21) sensiblement plane au travers de laquelle sont situées les ouvertures d'accès (22), et dans laquelle chaque pièce flottante (40) comporte au moins une partie avant (42) et au moins une partie arrière (44) qui prennent en sandwich la paroi frontale (21) de la plaque de finition (20).

8. Elément d'habillage (10) selon la revendication précédente, dans lequel la partie avant (42) de la pièce collerette (40) longe l'une des ouvertures d'accès (22) de la plaque de finition (20) sur l'ensemble de son contour.

9. Elément d'habillage (10) selon l'une des deux revendications précédentes, dans lequel chaque partie arrière (44) de la pièce flottante (40) est rattachée au reste de la pièce flottante (40) de façon flexible.

10. Elément d'habillage (10) selon l'une des revendications précédentes, dans lequel ladite partie (50A) desdits moyens de fixation (50) comporte plusieurs pattes d'encliquetage (51) distinctes.

11. Elément d'habillage (10) selon les deux revendications précédentes, dans lequel les parties arrière (44) de la pièce flottante (40) sont adaptées à résister ensemble à un effort d'arrachement par rapport à la plaque de finition (20) qui est supérieur à l'effort nécessaire pour encliqueter les pattes d'encliquetage (51) sur l'appareillage électrique (60).

12. Elément d'habillage (10) selon l'une des revendications précédentes, dans lequel ladite partie (50A) desdits moyens de fixation (50) est solidarisée à la plaque de finition (20) avec du jeu selon deux axes orthogonaux (X, Y).

13. Ensemble électrique comprenant au moins deux appareillages électriques (60), **caractérisé en ce qu'**il comprend en outre un élément d'habillage (10) conforme à l'une des revendications précédentes, dont ladite partie (50A) des moyens de fixation (44, 50) est fixée à l'un desdits appareillages électriques (60).

## Patentansprüche

1. Verkleidungselement (10) mit
- einer Abdeckplatte (20), die mindestens zwei Öffnungen (22) für den Zugang zu den Funktionsteilen (90) zweier verschiedener, in zwei elektrischen Einzelboxen befestigter Elektrogeräte (60) begrenzt, und
- Mitteln (44, 50) für die Befestigung der Abdeckplatte (20) an den beiden Elektrogeräten (60),
wobei mindestens ein Teil (50A) der Befestigungsmittel (44, 50) an der Abdeckplatte (20) so mit Spiel befestigt ist, daß die Befestigungsmittel (44, 50) selbst dann spannungsfrei an den beiden Elektrogeräten (60) befestigt werden können, wenn die beiden Elektrogeräte (60) gegenüber den beiden Zugangsöffnungen leicht versetzt sind, wobei das Spiel größer als ein Zehntel Millimeter ist.

2. Verkleidungselement (10) gemäß dem vorangehenden Anspruch, bei dem der Teil (50A) der Befestigungsmittel (44, 50) dazu ausgelegt ist, an einem der Elektrogeräte (60) befestigt zu werden, und bei dem ein anderer Teil (50B) der Befestigungsmittel (44, 50) dazu ausgelegt ist, an einem anderen der Elektrogeräte (60) befestigt zu werden.

3. Verkleidungselement (10) gemäß dem vorangehenden Anspruch, bei dem jeder Teil (50A, 50B) der Befestigungsmittel (44, 50) mit Spiel an der Abdeckplatte (20) befestigt ist.

4. Verkleidungselement (10) gemäß einem der vorangehenden Ansprüche, bei dem der Teil (50A) der Befestigungsmittel (44, 50) zu ein und demselben schwebenden Teil (40) gehört, das von der Abdeckplatte (20) verschieden ist und das mit Spiel an der Abdeckplatte (20) befestigt ist.

5. Verkleidungselement (10) gemäß den beiden vorangehenden Ansprüchen, bei dem so viel schwebende Teile (40) vorgesehen sind, wie es Zugangsöffnungen (22) in der Abdeckplatte (20) gibt.

6. Verkleidungselement (10) gemäß einem der beiden vorangehenden Ansprüche, bei dem das schwebende Teil (40) einen Kragen (43) aufweist, der eine der Zugangsöffnungen (22) innen umrandet und der den Teil (50A) der Befestigungsmittel (44, 50) trägt.

7. Verkleidungselement (10) gemäß einem der drei vorangehenden Ansprüche, bei dem die Abdeckplatte (20) eine im Wesentlichen ebene Frontplatte (21) aufweist, durch die hindurch die Zugangsöffnungen (22) angeordnet sind, und bei der jedes schwebende Teil (40) mindestens einen vorderen Teil (42) und einen hinteren Teil (44) aufweist, die die Frontplatte (21) der Abdeckplatte (20) zwischen sich einschließen.

8. Verkleidungselement (10) gemäß dem vorangehenden Anspruch, bei dem sich der vordere Teil (42) des Kragenteils (40) entlang des gesamten Umfangs einer der Zugangsöffnungen (22) der Abdeckplatte (20) erstreckt.

9. Verkleidungselement (10) gemäß einem der beiden vorangehenden Ansprüche, bei dem jeder hintere Teil (44) des schwebenden Teils (40) mit dem Rest des schwebenden Teils (40) biegsam verbunden ist.

10. Verkleidungselement (10) gemäß einem der vorangehenden Ansprüche, bei dem jeder Teil (50A) der Befestigungsmittel (50) mehrere einzelne Einrastzungen (51) aufweist.

11. Verkleidungselement (10) gemäß den beiden vorangehenden Ansprüchen, bei dem die hinteren Teile (44) des schwebenden Teils (40) dazu ausgelegt sind, gemeinsam gegenüber der Abdeckplatte (20) einer Herausziehkraft zu widerstehen, die größer als die zum Einrasten der Einrastzungen (51) am Elektrogerät (60) notwendige Kraft ist.

12. Verkleidungselement (10) gemäß einem der vorangehenden Ansprüche, bei dem der Teil (50A) der Befestigungsmittel (50) mit Spiel entlang zweier zueinander rechtwinkligen Achsen (X, Y) an der Abdeckplatte (20) befestigt ist.

13. Elektrische Einheit mit mindestens zwei Elektrogeräten (60), **dadurch gekennzeichnet, daß** sie außerdem ein Verkleidungselement (10) gemäß einem der vorangehenden Ansprüche aufweist, dessen Teil (50A) der Befestigungsmittel (44, 50) an einem der beiden Elektrogeräte (60) befestigt ist.

## Claims

1. A cover element (10) comprising:
- a trim panel (20) which delimits at least two openings (22) for access to the functional portions (90) of two separate items of electrical equipment (60) mounted in two single-user electrical back boxes, and
- means (44, 50) for mounting the trim panel (20) to said two items of electrical equipment (60);
at least one portion (50A) of said mounting means (44, 50) being secured with a clearance to the trim panel (20) in a manner such as to enable said mounting means (44, 50) to be mounted on said two items of electrical equipment (60) without stress even when these two items of electrical equipment (60) are slightly off-centre with respect to the two access openings (22), said clearance being more than one tenth of a millimetre.

2. The cover element (10) as claimed in the preceding claim, in which said portion (50A) of said mounting means (44, 50) is adapted to be mounted on one of said items of electrical equipment (60), and in which another portion (50B) of said mounting means (44, 50) is adapted to be mounted on another of said items of electrical equipment (60) .

3. The cover element (10) as claimed in the preceding claim, in which each portion (50A, 50B) of said mounting means (44, 50) is secured with a clearance to the trim panel (20).

4. The cover element (10) as claimed in one of the preceding claims, in which said portion (50A) of said mounting means (44, 50) belongs to one and the same floating part (40) which is separate from the trim panel (20) and which is mounted with a clearance on said trim panel (20).

5. The cover element (10) as claimed in the two preceding claims, in which as many floating parts (40) are provided in the trim panel (20) as there are access openings (22).

6. The cover element (10) as claimed in one of the two preceding claims, in which said floating part (40) comprises a collar (43) which internally borders one of the access openings (22) and which bears said portion (50A) of the mounting means (44, 50).

7. The cover element (10) as claimed in one of the three preceding claims, in which the trim panel (20) comprises a substantially planar front wall (21) through which the access openings (22) are located, and in which each floating part (40) comprises at least a front portion (42) and at least a rear portion (44) which sandwich the front wall (21) of the top plate (20).

8. The cover element (10) as claimed in the preceding claim, in which the front portion (42) of the collar part (40) extends along one of the access openings (22) of the trim panel (20) over its entire contour.

9. The cover element (10) as claimed in one of the two preceding claims, in which each rear portion (44) of the floating part (40) is flexibly connected to the remainder of the floating part (40).

10. The cover element (10) as claimed in one of the preceding claims, in which said portion (50A) of said mounting means (50) comprises a plurality of separate snap-fastening tabs (51).

11. The cover element (10) as claimed in the two preceding claims, in which the rear portions (44) of the floating part (40) are adapted to together withstand a prying force with respect to the trim panel (20) which is greater than the force necessary to snap-fasten the snap-fastening tabs (51) on the electrical appliance (60).

12. The cover element (10) as claimed in one of the preceding claims, in which said portion (50A) of said mounting means (50) is secured to the trim panel (20) with a clearance along two orthogonal axes (X, Y).

13. An electrical assembly comprising at least two items of electrical equipment (60), **characterized in that** it further comprises a cover element (10) as claimed in one of the preceding claims, wherein said portion (50A) of the mounting means (44, 50) is secured to one of said items of electrical equipment (60).
